(19) Europäisches Patentamt / European Patent Office / Office européen des brevets

(11) **EP 3 787 414 B1**

(12) **EUROPEAN PATENT SPECIFICATION**

(45) Date of publication and mention
of the grant of the patent:
**24.04.2024 Bulletin 2024/17**

(21) Application number: **19719316.2**

(22) Date of filing: **26.04.2019**

(51) International Patent Classification (IPC):
*A23D 7/00* (2006.01)    *A23D 7/02* (2006.01)
*A23D 9/00* (2006.01)    *A23L 29/00* (2016.01)
*C11B 7/00* (2006.01)    *A23C 9/15* (2006.01)
*A23D 7/04* (2006.01)    *A23P 30/40* (2016.01)

(52) Cooperative Patent Classification (CPC):
**A23P 30/40; A23C 9/1504; A23D 7/04; A23L 29/04**

(86) International application number:
**PCT/EP2019/060729**

(87) International publication number:
**WO 2019/211185 (07.11.2019 Gazette 2019/45)**

(54) **FOOD COMPOSITION COMPRISING DAIRY FAT SUITABLE FOR WHIPPING OR FOAMING AND WHIPPED OR FOAMED FOOD COMPOSITION COMPRISING DAIRY FAT**

LEBENSMITTELZUSAMMENSETZUNG MIT MILCHFETT ZUM AUFSCHLAGEN ODER AUFSCHÄUMEN UND AUFGESCHLAGENE ODER GESCHÄUMTE LEBENSMITTELZUSAMMENSETZUNG MIT MILCHFETT

COMPOSITION ALIMENTAIRE COMPRENANT DE LA GRAISSE LAITIÈRE APPROPRIÉE POUR FOUETTER OU MOUSSER ET COMPOSITION ALIMENTAIRE FOUETTÉE OU MOUSSÉE COMPRENANT DE LA GRAISSE LAITIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2018 EP 18170176**

(43) Date of publication of application:
**10.03.2021 Bulletin 2021/10**

(73) Proprietor: **FrieslandCampina Nederland B.V.**
**3818LE Amersfoort (NL)**

(72) Inventors:
- **KLOEK, William**
  **6700 AE Wageningen (NL)**
- **CUSTINNE, Marc Jacques Christian Maurice**
  **6700 AE Wageningen (NL)**
- **NICOLAS, Yves**
  **6700 AE Wageningen (NL)**

(74) Representative: **FrieslandCampina IP Department**
**Bronland 20**
**6708 WH Wageningen (NL)**

(56) References cited:
**EP-A1- 3 289 884    US-A- 4 375 485**
**US-B2- 9 648 895**

- **D. Illingworth ET AL: "Anhydrous Milk Fat Manufacture and Fractionation" In: "Dairy Fats and Related Products", 27 October 2009 (2009-10-27), Blackwell Publishing Ltd, Singapore, XP055499881, ISBN: 978-1-4051-5090-3 pages 108-166, DOI: 10.1002/9781444316223.ch6, page 120, paragraph 6.5.2 - page 126; figures 6.12-6.15**
- **BAZMI ET AL: "Aeration of low fat dairy emulsions: Effects of saturatedunsaturated triglycerides", INTERNATIONAL DAIRY JOURNAL, ELSEVIER APPLIED SCIENCE, BARKING, GB, vol. 17, no. 9, 11 June 2007 (2007-06-11), pages 1021-1027, XP022112745, ISSN: 0958-6946, DOI: 10.1016/J.IDAIRYJ.2006.12.011**

EP 3 787 414 B1

- BAZMI A ET AL: "Effects of processing conditions on structural and functional parameters of whipped dairy emulsions containing various fatty acid compositions", JOURNAL OF DAIRY SCIENCE, AMERICAN DAIRY SCIENCE ASSOCIATION, US, vol. 92, no. 8, 1 August 2009 (2009-08-01) , pages 3566-3574, XP026955552, ISSN: 0022-0302 [retrieved on 2009-08-01]
- DEFFENSE E: "MILK FAT FRACTIONATION TODAY: A REVIEW1", JOURNAL OF THE AMERICAN OIL CHEMISTS SOCIETY, SPRINGER, DE, vol. 70, no. 12, 1 December 1993 (1993-12-01), pages 1193-1201, XP000416952, ISSN: 0003-021X, DOI: 10.1007/BF02564225

**Description**

The invention relates to a food composition comprising dairy fat - which food composition is whipped or foamed or which food composition is suitable for whipping or foaming. The invention further relates to a method for preparing a whippable, foamable, whipped or foamed food composition comprising dairy fat. The invention further relates to a dairy fat product, which may be used in the preparation of a food composition according to the invention.

Whipped or foamed food compositions containing fat (such as whipped or foamed cream) have various well known applications, e.g. as toppings on or fillings in desserts or baked products or as topping on a beverage, e.g. coffee or a cocoa drink. Relevant parameters for functional performance of such whipped or foamed products include overrun (the percentage of expansion of the volume of the product as a result of whipping or foaming), the ease of whippability/foamability, shelf-life stability, resistance to temperature variation, visual appearance, mouthfeel and taste.

Traditionally, cream is a dairy product composed of the fat layer skimmed from the top of milk before homogenization. However, alternatives to dairy cream have been developed which may be cheaper or have different properties, e.g. a different storage stability or heat resistance. Such alternatives include the use of non-dairy fats and the addition of non-dairy emulsifiers.

EP 635 216 A1 (published in 1993) observes that vegetable oils having a large amount of lauric fats, such as coconut oil and palm kernel oil, have been used in whippable creams, alone or with natural fresh cream. Such creams are said to have excellent melting properties in the mouth, freshness and cold feeling, but a poor heat resistance. In order to improve the heat resistance, EP 635 216 A1 proposed to provide a fat composition wherein the amount of fatty acids having 8-12 carbons are preserved and introducing a small amount of fatty acids with a chain of 16 or more carbon atoms. It is further observed that the fatty acids having 8-12 carbons occupy for more than half the 2-position of the glyceride. Furthermore, the claimed product comprises specified amounts of glycerides with a total carbon number of not more than 38 carbons, glycerides with a total carbon number of 42-46 carbons and glycerides with a total carbon number of not less than 48 carbons.

More recently, JP2007/282535 proposed to provide a foamable oil in water emulsion with reportedly good over time emulsion stability at room temperature storage, having a proportion of 30-60 wt.% lauric acid residues based on total fatty acid residues in combination with specified amounts of glycerides with a total carbon number of not more than 38, glycerides with a total carbon number of 42-49 and glycerides with a total carbon number of 50-62.

Such compositions suffer amongst others from the drawback that they require the use of non-dairy ingredients. There remains a need though for whippable or foamable compositions based on dairy fat. Dairy fat provides distinct sensory sensations upon consumption that are appreciated by consumers.

US9648895B2 relates to an oil-in-water emulsion for whipped cream and to a whipped cream obtained by whipping the emulsion. It in particular relates to a stabilized whippable oil-in-water emulsion upon increasing the trilaurin triglyceride content of its oily phase, and to the stabilized cream obtained by whipping the emulsion.

EP3289884A1 discloses a dairy food composition consisting of 15 to 80% by weight of milk fat relative to the total weight of the composition; 4 to 45% by weight of milk proteins relative to the total weight of the composition, 25 to 80% by weight of milk carbohydrates relative to the total weight of the composition, optionally up to 1% by weight of at least one emulsifier relative to the total weight of said dairy food composition, and where said dairy composition is such that it contains a dry extract greater than 93% by weight relative to the total weight of the composition, and it has a particle size such that its Mie diameter D[4.3] is between 5 and 25mu.

US4375485A discloses a process for preparing instantly whippable whipping cream and whipping cream products with increased content of surfactants, whereby butter fat and lactic acid are separated from milk and/or milk products and a surfactant is prepared therefrom which consists of lactic acid esters of monoglycerides or of mixtures of lactic acid esters of monoglycerides with monoglycerides, mixing said surfactants with butter fat and emulsifying the fatty mixture in a milk protein and milk sugar containing solution.

BAZMI ET AL: "Aeration of low fat dairy emulsions: Effects of saturatedunsaturated triglycerides", INTERNATIONAL DAIRY JOURNAL, vol.17, no.9, 11 June 2007, p.1021-1027, and BAZMI ET AL: "Effects of processing conditions on structural and functional parameters of whipped dairy emulsions containing various fatty acid compositions", JOURNAL OF DAIRY SCIENCE, vol.92, no.8, August 2009, p.3566-3574, are similar documents relating to whippable dairy emulsions containing either 10wt% anhydrous milk fat (AMF), or 10wt% of a mixture between 2 parts AMF with 1 part of its fractionated olein- or stearin-rich fraction.

There remains a need for foamable or whippable food compositions based on dairy fat that have improved storage stability compared to conventional whippable/foamable dairy cream, under ambient and/or refrigerated conditions. In particular, it would be desirable to provide a foamable or whippable food composition comprising dairy fat which maintains good foaming or whipping properties after exposure to environmental effects that are detrimental to the whippability or foamability of known whippable/foamable dairy cream composition, such as temperature fluctuations during storage. In particular, there is a need for a foamable or whippable food composition comprising dairy fat which maintains good foaming or whipping properties after having been exposed to a temperature above storage temperature (which is usually in the range of 2-12 °C), e.g. to a temperature up to about 30 °C, e.g. ambient temperature, in particular to a temperature in the range of 15-25 °C.

It has now been found that it is possible to provide a whipped or foamed food composition comprising dairy fat that meets one or more objects of the invention, in particular a whippable or foamable dairy cream that has improved resistance to a detrimental effect of temperature variation, more in particular in that a whipped or foamed dairy cream has a reduced firmness variation when made from a whippable of foamable dairy composition that has been exposed to a temperature fluctuation due to (temporary) exposure of a refrigerated composition to higher temperature , such as ambient temperature.

Accordingly, the present invention relates to a food composition comprising dairy fat - which food composition is whipped or foamed or which food composition is, optionally after reconstitution in water, suitable for whipping or foaming - the food composition having a fat content of at least 15 wt.%, preferably of at least 18 wt. %, more preferably of at least 23 wt.%, in particular of at 30 wt. %, based on total weight of the food composition, the composition comprising acylglycerides having a carbon number in the range of 24-40 ('CN24-CN40') and acylglycerides having a carbon number in the range of 42-56 ('CN42-CN56'), the molar ratio of acylglycerides having a carbon number in the range of 24-40 to acylglycerides having a carbon number in the range of 42-56 ('CN24-CN40 : CN42-CN56') being in the range of 1.1 - 1.4, and wherein, based on the total weight of the fatty acid residues, calculated as fatty acid methyl ester, the food composition has a C4:0 fatty acid content of at least 3.5 wt. %, preferably of 4.0-5.0 wt. %; a C6:0 fatty acid content of at least 2.0 wt. %, preferably 2.0-3.0 wt. %; a C8:0 fatty acid content of at least 1.0 wt. %, preferably 1.2-1.5 wt. %; and a C12:0 fatty acid content of less than 6.0 wt. %. The invention further relates to a method for preparing a whippable food composition, foamable food composition, whipped food composition or foamed food composition comprising dairy fat, in particular a food composition according to any of the preceding claims, comprising mixing acylglycerides having a carbon number in the range of 24-40 ('CN24-CN40') and acylglycerides having a carbon number in the range of 42-56 ('CN42-CN56') in a molar ratio 'CN24-CN40' : 'CN42-CN56' in the range of 1.1 - 1.4, with water, an emulsifier and - if desired - one or more further ingredients, thereby forming the food composition, and wherein at least a first dairy fat product is provided, which first dairy fat product is milk fat, e.g. anhydrous milk fat, and at least a second dairy fat product is provided, which second dairy fat product is an OS-fraction of milk fat, obtained in a multiple melt crystallization fractionation process wherein milk fat is fractionated into a first fluid phase ('O') and a first solid phase ('S') and then said first fluid phase is fractionated into a second fluid phase ('OO') and a second solid phase ('OS'), which second solid phase is said second dairy fat product; and mixing the first dairy fat product, the second dairy fat product, water and emulsifier, thereby forming the food composition; or in which method a dairy cream is mixed with said OS-fraction of milk, thereby forming the food composition.

Typical food compositions according to the invention which require reconstitution in water to be whippable or foamable are powder compositions, such as powdered instant whippable or foamable cream compositions. In a further aspect the invention relates to a method for preparing a powder composition according to the invention, comprising providing a food composition according to the invention which is an emulsion of the oil-in-water type and drying the emulsion of the oil-in-water type.

The invention further relates to a dairy fat product comprising acylglycerides having a carbon number in the range of 24-40 ('CN24-CN40') and acylglycerides having a carbon number in the range of 42-56 ('CN42-CN56'), the molar ratio CN24-CN40 : CN42-CN56 being in the range of 1.1 - 1.4, preferably in the range of 1.13 - 1.4, more preferably in the range of 1.2 - 1.4, in particular in the range of 1.3 - 1.4, and the fat product having each of the following characteristics:

- a C4:0 fatty acid content of 4.0-5.0 wt. % based on the total weight of the fatty acid residues, calculated as fatty acid methyl ester;
- a C6:0 fatty acid content of 2.0-3.0 wt. % based on the total weight of the fatty acid residues, calculated as fatty acid methyl ester;
- a C8:0 fatty acid content of 1.2-1.5 wt. % based on the total weight of the fatty acid residues, calculated as fatty acid methyl ester.
- a C12:0 fatty acid content of less than 6.0 wt. %, preferably 1.0-5.0 wt. % based on the total weight of the fatty acid residues, calculated as fatty acid methyl ester
- a total content of fatty acid residues with a carbon chain length of 8-12 carbons - based on the total weight of the fatty acid residues of less than 12 wt. %, preferably of 5.0-9.0 wt. % based on the total weight of the fatty acid residues, calculated as fatty acid methyl ester;
- a total content of acylglycerides having a carbon number of 36 to 38, based on total acylglycerides, of at least 30 mol. %, preferably 32-45 mol. %, in particular 34-42 mol. %,
- a total content of acylglycerides having a carbon number of 52 to 54, based on total acylglycerides, of 2.0-10 mol. %, preferably 2.5-8 mol. %, in particular 3.0-7.0 mol.%
- weight to weight ratio of SAFA to the sum of PUFA and MUFA calculated on the basis of their fatty acid methyl esters in the range of 2.4-4.0, preferably in the range of 2.6-3.9, more preferably in the range of 2.95-3.75, in particular in the range of 3.0-3.75, more in particular in the range of 3.0-3.5.

The invention further relates to a method for preparing a whipped or foamed food composition, comprising providing a food composition according to the invention , which food composition is an emulsion of the oil-in-water type and subjecting said food composition to whipping or foaming, thereby obtaining whipped or foamed food composition.

As illustrated by the examples, the invention provides a food composition which has a number of advantages over a comparable food composition wherein the ratio CN24-CN40 : CN42-CN56 is lower. The examples also illustrate how a fat product according to the invention, obtainable by combining milk fat with a specific milk fat fraction (OS), is suitable to provide a food composition according to the invention. The examples illustrate in particular that a food composition according to the invention is less susceptible to detrimental effects of a temperature variation during storage (of the food composition in non-whipped and non-foamed state). Namely, it was found that the variation in firmness of a whipped food composition according to the invention which was prepared from a food composition that had been disturbed from refrigerated storage at about 4 °C for 1 day at 25 °C, was lower than for a comparable food composition wherein the fat phase consisted of milk fat. It was further found that it was possible to improve overrun by using a fat product according to the invention for formulating a food composition according to the invention. Further, it was found that in accordance with the invention it is possible to improve whipping properties at a temperature of more than 4 °C, such as at a temperature in the range of about 12 to about 15 °C.

Unless defined otherwise, all technical and scientific terms used herein have the same meaning as commonly understood by one of ordinary skill in the art.

The term 'fatty acid' is generally used herein as a genus for free fatty acids and fatty acid residues bound to another organic moiety, in particular as part of an acylglyceride.

Milk fat is the fat phase of milk. Milk fat is a complex mixture of triglycerides and other lipid components. Milk fat typically consists for the largest part of triglycerides (e.g. about 98 %). The triglycerides generally have a carbon number in the range of 26-54. In particular for milk fat from cow milk, usually, the carbon number distribution is bimodal, *i.e.* milk fat has fatty acids with a relatively high content of relatively small acyl groups (4-6 carbons), a relatively high content of relatively large acyl groups (at least 14 carbons) and a relatively low content of acyl groups of intermediate length (8-12 carbons). The inventors found that molar ratio CN24-CN40 : CN42-CN56 of milk fat is variable and depends on the animal providing the milk, its nutrition and seasonal influence.

In addition to triglycerides, milk fat typically contains several minor components, such as cholesterol, fat-soluble vitamins, free fatty acids, monoglycerides, diglycerides and various other organic components, such as lactones, ketones and aldehydes, contributing to the characteristic flavour or aroma of milk fat. Milk fat (isolated from milk) is commercially available, e.g. in essentially water-free from, which product is generally known as anhydrous milk fat (AMF).

The term 'dairy fat' is used as a genus for milk fat and parts of milk fat. Such parts can be any milk fat fraction, combination of milk fat fractions or combination of a milk fat fraction and milk fat, in particular a combination of an OS-fraction of milk fat and milk fat.

The term 'OS-fraction', or shortly 'OS', originates from a generally known process to obtain fraction from milk fat fractionation, namely a fractionation on the basis of melt temperature (dry fractionation, also known as melt crystallization, as opposed to solvent crystallization). This process can be a single-step fractionation or a multi-step fractionation. In each fractionation step a liquid phase (marked as 'O' for 'olein', because this fraction typically is enriched in oleic acid (bound as triglyceride), indicative of long-chain unsaturated fatty acid content) and a solid phase (marked as 'S' for 'stearin because this fraction typically is enriched in stearic acid (bound as triglyceride), indicative of long-chain saturated fatty acid content). In a multi-step process at least one of the fractions obtained in a previous fractionation step is subjected to at least one further fractionation, resulting in further fluid fraction and a further solid fraction. The obtained fractions can be named on the basis of the subsequent fractions from which the final fat fraction is obtained (see Deffense, E.M.J. (1987), Fat Sci. Technol., 89, 502-507). Thus, OO is the fluid fraction obtained after the dry fractionating the fluid fraction from a first dry fractionation step, whereas OS would be the solid fraction after that second fractionation step. As another example: OOO is the fluid fraction of a triple dry fractionation process wherein the liquid phase of a first fractionation (O) was subjected to a second dry fractionation step and the liquid phase of the second fractionation (OO) was subjected to a third fractionation. Further details about obtaining fractions of milk fat by melt crystallization will be given below.

The term 'fat product' is used herein for a composition at least substantially consisting of fat.

The fatty acid content and the carbon number are determinable by gas chromatography with flame ionization detection (GC-FID). A substance of which the fatty acid content is to be determined is first subjected to hydrolysis to obtain the free fatty acids of which subsequently methyl esters are prepared. The fatty acids (dissolved in chloroform) are then injected in the GC and measured as their methyl esters,. Identification of the carbon numbers and correction factor for the FID response can be done using BCR-632-A sample 160 from Sigma-Aldrich. The carbon number is based on moles of acylglycerides. The term 'fatty acid content' as used herein is based on weight, and calculated as fatty acid methyl ester.

The food composition according to the invention is suitable for whipping or foaming. In practice this means that a product with a foamed or whipped structure is obtained when subjected to a typical whipping or foaming step as the skilled person will know to employ for a whippable of foamable dairy food composition, in particular a dairy cream. In particular, a food composition is considered suitable for whipping or foaming if it is possible to achieve an overrun of at least 100 %, preferably at least 120%.

The food composition according to the invention, at least when ready to be foamed or whipped, is typically a cream, which is an emulsion of the fat in water, i.e. an emulsion of the oil-in-water type (o/w emulsion).

The food composition is usually a product having an about neutral pH, in particular a pH of 6-7. Such composition is also colloquially referred to as a sweet cream, not because it would necessarily contain sugar or sweetening agent, but to distinguish it from sour cream.

In a specific embodiment, the food composition is an instant composition (typically a powder) comprising the fat, emulsifier (such as protein) and optional one or more other ingredients, which - upon mixing the dry composition - forms a whippable or foamable cream.

The food composition comprises dairy fat and, at least when in emulsified formed, water and an emulsifier. These usually form the major components. In a specific embodiment there is a third major component: sugar(s).

Usually, the dairy fat is bovine dairy fat, preferably fat from cow milk. Fat from buffalo is another particularly useful starting material. Alternatively, the dairy fat may in particular be from milk of another hoofed ungulate, such as sheep goat milk or camel. It is also possible to use a mixture of dairy fats from milk from different species of mammals.

The fat content of a food composition according to the invention is preferably at least 18 wt. %, more preferably at least 23 wt. %, most preferably at least 30 wt. %. For a food composition of the o/w emulsion type, the fat content is usually 45 wt.% or less, in particular 40 wt.% or less. For an instant food composition, the fat content is generally higher, typically in the range of 50-99 wt. %, in particular in the range of 80-95 wt.%. The water content of the food composition is usually less than 81 wt. %, preferably less than 76 wt.%, more preferably less than 69 wt.%. Except for a food composition which first needs to be reconstituted in water, such as an instant food composition, the water content usually is at least 30 wt.%, preferably at least 40 wt. %, more preferably at least 50 wt.%.

A minor part of the fat may in principle be non-dairy fat. However, good results have been achieved with a food composition wherein the fat consists of dairy fat. Thus, generally, the dairy fat content is 90-100 wt. % of the total fat content, preferably 95-100 wt.%, in particular 98-100 wt. %. Generally more than 90 wt. % of the total fat content is formed by triglycerides, preferably more than 95 wt. %, in particular at least 98 wt. % . One or more minor components that may be present are typically those present in milk fat.

An important characteristic of the fat composition is the presence of acylglycerides having a carbon number in the range of 24-40 ('CN24-CN40') and acylglycerides having a carbon number in the range of 42-56 ('CN42-CN56'), the molar ratio of acylglycerides having a carbon number in the range of 24-40 to acylglycerides having a carbon number in the range of 42-56 ('CN24-CN40 : CN42-CN56'). Typically OS fractions of milk fat are particularly suitable in the preparation of a composition according to the invention. The OS fraction of milk fat typically has a higher ratio CN24-CN40 : CN42-CN56 than the milk fat it was obtained from. As illustrated in the Examples, a food composition according to the invention, having a high ratio CN24-CN40 : CN42-CN56 , when whipped or foamed, has better firmness stability (measured over 24 hours from whipping), after refrigerated storage (at 4 °C), after having been interrupted by a heat-shock (at 25 °C) in the non-foamed/non-whipped state. Herewith the food composition is more robust, as it is less vulnerable to adverse effects caused by temperature fluctuations prior to whipping or foaming. It was further found that a whipped or foamed food composition according to the invention outperformed a comparable cream made with non-fractionated milk fat in terms of a smoother mouthfeel and a reduced off-colour (whiter appearance). Furthermore, in accordance with the invention it is feasible to provide a composition with an increased overrun compared to a similarly produced food composition wherein the fat is non-fractionated milk fat.

The ratio CN24-CN40 : CN42-CN56 in the food composition according to the invention is higher than said ratio in high melting milk fat fraction, such as a stearin (S) fraction of milk fat, obtained by melt crystallization. Stearin fractions have been used before to improve whipping properties of cream for ice cream manufacturing. The inclusion of a stearin fraction in milk fat results in a higher melting fat and a reduction in the ratio CN24-CN40 : CN42-CN56 compared to milk fat. The use of a food composition according to the present invention, which may e.g. be obtain by including an olein fraction of milk fat obtained by melt crystallization - in particular an OS-fraction - results in a lower melting fat and an increase in the ratio CN24-CN40 : CN42-CN56 compared to milk fat, and is therefore in an opposite direction from using an S-fraction of milk fat. The inventors consider it in particular surprising that increasing said ratio and thereby reducing the melting temperature of the fat phase has the effect found by them because another dairy fat fraction (OOOO) with a lower melting temperature than milk fat was ineffective.

However, as illustrated in the present examples, whipped food compositions made with a combination of milk fat and an S-fraction had inferior sensory properties. It resulted in a sticky and grainy mouthfeel. Although the grainy mouthfeel could be reduced by more intense homogenization, this had an adverse effect on overrun for a food composition wherein the fat was a combination of milk fat and the S-fraction.

In particular good results have been achieved with a composition wherein the molar ratio CN24-CN40 : CN42-CN56 is 1.1 or more, preferably in the range of 1.1 - 1.4, more preferably in the range of 1.13 - 1.4, in particular in the range of 1.2 - 1.4, more in particular in the range of 1.3-1.4..

The total content of saturated fatty acid (SAFA) residues is usually more than 68 wt. %, preferably at least 71 wt. %, in particular at least 74 wt. %. Usually the total content of saturated fatty acid residues is less than 80 wt. %, in particular 78 wt. % or less, based on total fatty acid content of the food composition.

The total content of monounsaturated fatty acids (MUFA) is usually in the range of 18-26 wt.%, preferably in the range of 20-25 wt.%, in particular in the range of 21-25 wt.% based on total fatty acid content of the food composition.

The total content of polyunsaturated fatty acids (PUFA) is usually about 4 wt.% or less, in particular in the range of 2.0-2.6 wt.%, based on total fatty acid content of the food composition.

The weight/weight ratio SAFA/(PUFA+MUFA) of milk fat is variable and depends on the animal providing the milk, its nutrition and seasonal influences. The inventors found that for milk from a Dutch cow variety, the ratio is higher in winter than in summer. In milk fat from winter milk from a Dutch cow variety, said ratio may be as high as 2.9. Yet in milk fat from its summer milk said ratio is considerably lower (e.g. 2.41).

Usually, the weight/weight ratio SAFA/(PUFA + MUFA) is in the range of 2.4-4.0, preferably in the range of 2.6-3.9, more preferably in the range of 2.8-3.8, even more preferably in the range of 2.95-3.75, in particular in the range of 3.0-3.75, more in particular in the range of 3.0-3.5.

A food composition according to the invention is further characterized by a relatively high content of relatively short chain fatty acids, compared to milk fat or other fat compositions that have been used before to prepare whippable or foamable creams.

The C4:0 fatty acid content is at least 3.5 wt. %, preferably 4.0-5.0 wt. %, based on total fatty acid content of the food composition.

The C6:0 fatty acid content is at least 2.0 wt. %, preferably 2.0-3.0 wt. %, based on total fatty acid content of the food composition.

The C8:0 fatty acid content is at least 1.0 wt. %, preferably 1.2-1.5 wt. %, based on total fatty acid content of the food composition.

In particular, compared to known compositions based on vegetable fats, such as referred to above, the content of fatty acid residues with a carbon chain length of 8-12 carbons is usually surprisingly low, whilst achieving good properties for a foamable/whippable/foamed/whipped food composition. The C12:0 fatty acid content is less than 6.0 wt. %, in particular 1.0-5.0 wt. %, based on total fatty acid content of the food composition. The content of fatty acid residues with a carbon chain length of 8-12 carbons - based on the total fatty acid content is preferably less than 12 wt. %, in particular 5.0-9.0 wt. %.

The total content of acylglycerides having a carbon number of 36 to 38, based on total acylglycerides , is generally at least 30 mol %, preferably 32-45 mol. %, in particular 34-42 mol %.

The total content of acylglycerides having a carbon number of 52 to 54, based on total acylglycerides, is generally 2.0-10 mol %, preferably 2.5-8 mol %, in particular 3.0-7.0 mol %.

The food composition generally comprises an emulsifier. An emulsifier facilitates emulsification of the fat in the water phase. For this purpose proteins with emulsifying properties, such as dairy proteins (whey proteins, caseins, caseinates), are particularly suitable. Whey protein or casein/caseinate can be included in an at least substantially pure form, e.g. as whey protein isolate, whey protein concentrate, micellar casein isolate, casein concentrate or a fraction thereof ( e.g. beta serum protein , a whey protein) or as a mixture, e.g. as milk, milk protein concentrate or milk powder, in particular skim milk or skim milk powder or as buttermilk or buttermilk powder, in particular sweet butter milk or sweet butter milk powder. These are also a source of one or more other food ingredients, such as minerals, lactose and - in the case of butter milk, whole milk or semi-skimmed milk or dried forms thereof - fats and other substances with emulsifying properties, such as lecithins and phospholipids, preferably derived from milk.

Good results have in particular been achieved with a food composition comprising beta-serum or sweet buttermilk. As used herein, "beta-serum" means an aqueous dairy ingredient separated from dairy streams containing greater than 60 wt.% fat which have been through phase inversion from an oil-in-water to a water-in-oil emulsion. Cream is the preferred starting material for the production of beta-serum. For example beta-serum is produced during the production of butter-oil (also known as anhydrous milk fat or AMF) from cream.

Usually, 50-100 wt. % of the proteins is dairy protein, in particular 90-100 wt.%. Preferably the total protein content essentially consists of one or more dairy proteins. Usually, the total content of proteins in a food composition according to the invention is at least 0.5 wt. %, preferably at least 1.0 wt. %. The protein content usually is less than 25 wt. %, in particular 20 wt. % or less, more in particular 10 wt. % or less. In particular for a food composition of the oil-in-water emulsion type, the protein content preferably is 5 wt. % or less.

In addition, or as an alternative to one or more emulsifying proteins the composition may comprise one or more further emulsifiers. Preferably, such emulsifier is selected from the group of lecithins, phospholipids, monoglycerides (E471) and diglycerides (E471). These may be of dairy origin or of non-dairy origin. If present, these are generally present in an amount of 0.03 wt.% - 1 wt.%. If present, for a food composition in emulsified form the total content of emulsifier other than emulsifying proteins usually is in the range of 0.05-0.8. wt %.

The average fat particle size (D 3,2) of the food product of the invention usually lies in the range of 0.3 - 10 $\mu$m, preferably in the range of 0.5 - 5 $\mu$m, more preferably in the range of 0.8 - 4 $\mu$m. The D (3,2) can be measured with a laser diffraction method using e.g. a Malvern Mastersizer analyser.

The food composition may comprise one or more sugars. The sugar content can be selected within a broad range dependent upon taste. If present, the concentration is usually at least 2 wt. %, in particular at least 4 wt. %. The content usually is up to 20 wt. % for the foamable or whippable composition in liquid form. The content is usually up to 40 wt. % for a powder/instant food composition (to be reconstituted in water prior to whipping/foaming).

If desired one or more stabilizers may be present. These may have the effect of an improved storage stability of a food composition according to the invention and/or an improved stability or firmness of a foamed or whipped food composition. The stabilizer is usually a polysaccharide. In principle any polysaccharide may be used allowed for use in dairy food applications, such as starch (modified or non-modified) or a natural gum. Preferred natural gums include, carrageenan, locust bean gum, xanthan gum and guar gum. Good results have been achieved with carrageenan. Usually, the polysaccharide content is in the range of 0.001-5-wt % preferably 0.005 - 4 wt. % for a food composition in emulsified form. For an instant/powdered food product, the polysaccharide content is usually in the range of 0.002 - 10 wt. % preferably 0.01-8 wt% (dry weight). The skilled person will be able to determine a particularly suitable concentration dependent on the specific polysaccharide or polysaccharides used, on the basis of common general knowledge and the information provided herein.

Further, the food composition may comprise one or more further ingredients that are known to be suitable to include in whipped, foamed, whippable or foamable food compositions. Examples thereof include colourants and flavours. These can be included in a usual concentration.

A foamable or whippable food composition is usually prepared by mixing the fat in fluid form (melted fat) with an aqueous phase comprising the emulsifier. The fat can be combined with the water as a single fluid fat blend or two or more fat compositions can be added separately. Particularly good results have been achieved with a food composition wherein the fat phase is composed of a first dairy fat product, namely milk fat (MF), and a second dairy fat product namely an OS-fraction of milk fat, obtained in a multiple melt crystallization fractionation process wherein milk fat is fractionated into a first fluid phase ('O') and a first solid phase ('S') and then said first fluid phase is fractionated into a second fluid phase ('OO') and a second solid phase ('OS'), which second solid phase is said second dairy fat product. The MF and the OS-fraction may be blended before adding the blend to the water or they can be added separately to the water. The MF and OS-fraction can be used in a wide range, usually in the range of MF:OS of 0:100 to 95:5, preferably in the range of 10:90-90:10. In general, it was found that a higher content of the OS-fraction provides a more constant firmness between fresh whipped or foamed food composition and firmness after 24 hrs. Further, firmness was found to be less sensitive to temperature fluctuation, with a higher OS-fraction content. Further, a higher content of the OS-fraction was found to result in a smoother visual texture and a smoother mouthfeel. In these aspects a combination of MF and OS-fraction also outperformed a comparable combination of MF and an S-fraction of milk fat. Particularly good results have been achieved with an MF:OS in the range of 25:75 to 75:25.

An emulsion of the oil in water type is formed by the mixing of the water and the fat, typically in the presence of an emulsifier. This is typically done at a temperature at which the fat and water are fluid, usually at a temperature above 40 °C, in particular in the range of in the range of 45-75 °C.

Said emulsion is usually subjected to one or more homogenization treatments. Homogenization conditions can be based on known conditions for preparing whippable of foamable creams.

In particular, good results have been achieved with a homogenization procedure of a food composition according to the invention , comprising at least two stages per homogenization treatment, wherein at least a first stage comprises a pressurization above atmospheric pressure (1 bar) and the subsequent stage of homogenization is carried out a lower pressure, which may be atmospheric pressure. Pressurization during said first stage is preferably at least about 1 bar above atmospheric pressure, i.e. at a pressure of at least about 1 bar gauge (barg), in particular at a pressure in the range of about 1 to about 250 barg, more in particular in the range of about 5 to about 150 barg. The subsequent stage may be carried out at essentially atmospheric pressure, or at a pressure above atmospheric pressure (yet typically below the pressure in the first stage). Preferably, the subsequent stage of homogenization is carried out at a pressure in the range of 0-50 barg, in particular in the range of about 1 to about 10 barg.

The emulsion may be subjected to an antimicrobial treatment, e.g. pasteurization or UHT, before, during or after homogenization.

The resultant food composition in emulsified form can be packaged in non-whipped and non-foamed stage in a manner known per se. The food composition can then be stored at 2 - 25 °C, in particular 4-12 °C, for several days, weeks or months, dependent on the type of antimicrobial treatment.

In order to obtain a whipped or foamed food composition according to the invention, one can foam or whip the food composition in emulsified form in a manner known per se. For example, a whipping machine like a Hobart™ , Sanomat™ or a Mondomix™, a siphon, an aerosol spray can or a whisk can be used.

In a specific embodiment, the emulsion comprising fat, optional other ingredient(s) and water, is subjected to a drying step to form an instant food composition. Drying can suitably be done by spray drying or freeze drying.

The invention further relates to a dairy fat product, in particular a fat product at least substantially consisting of fat from bovine milk, preferably cow milk. With respect to the fatty acid composition and distribution of said product, the same considerations apply as described above.

The dairy fat product according to the invention has a C4:0 fatty acid content of 4.0-5.0 wt. %, based on total fatty acid residues of the fat product, a C6:0 fatty acid content of 2.0-3.0 wt. %, based on total fatty acid residues of the fat product, a C8:0 fatty acid content of 1.2-1.5 wt. %, %, based on total fatty acid residues of the fat product, a C12:0 fatty acid content of less than 6.0 wt. %, preferably of 1.0-5.0 wt. %, based on total fatty acid residues of the fat product.

The total content of fatty acid residues with a carbon chain length of 8-12 carbons - based on the total fatty acid residues of the fat product is less than 12 wt. %, preferably 5.0-9.0 wt. %.

The molar ratio CN24-CN40 : CN42-CN56 is in the range of 1.1 - 1.4, more preferably in the range of 1.13 - 1.4, even more preferably in the range of 1.2 - 1.4, in particular in the range of 1.3 - 1.4.

The weight to weight ratio of SAFA to the sum of PUFA and MUFA calculated on the basis of their fatty acid methyl esters of the fat product is in the range of 2.4-4.0, preferably in the range of 2.6-3.9, more preferably in the range of 2.95-3.75, in particular in the range of 3.0-3.75, more in particular in the range of 3.0-3.5.

The total acylglyceride content of the fat product according to the invention usually is at least 90 wt. %, based on total weight, preferably at least 95 wt. %, based on total weight of the fat product. The balance is usually formed of one or more other components found in milk, such as one or more components with emulsifying properties. Such component may in particular be selected from emulsifying proteins, lecithins, phospholipids, monoglycerides and diglycerides.

The fat product according to the invention preferably essentially consists of dairy fat components.

The fat product according to the invention usually is a fat blend having a final melt temperature in the range of 23 °C to 38 °C. The final melt temperature can be determined by solid fat content measurements using pulse NMR or DSC. To this purpose standardized methodology is available, see WO2013/151423A1. In particular AOCS Cd 16b-93 revised in 2000 can be used.

A fat product according to the invention is advantageously prepared by combining milk fat, e.g. AMF, with a specific milk fat fraction, namely an OS-fraction obtainable by melt crystallization of milk fat. Melt crystallization, also known as dry fractionation, is a well-known process to obtain milk fat fractions. It is also possible to combine said OS-fraction with dairy cream, thereby obtaining a food composition according to the invention. One or more non-fat ingredients of the cream, such as water, can be removed to obtain a product that at least substantially consists of fat.

In order to provide a milk fat fraction (OS) for use in the preparation of a fat product or food composition according to the invention, preferably use is made of multi-step dry fractionation process (melt crystallization) using the so-called Tirtiaux process. This process is generally known in the art. In this process the starting fat - for the first step this is milk fat, usually anhydrous milk fat (AMF) is melted to erase crystal memory and subsequently cooled down in a crystallizer (typically double jacketed) equipped with a stirring device. The crystallizer typically has cooling surfaces. The fat to be crystallized is first heated to a temperature of about 20°C above its final melting temperature. The cooling down is performed using a process in which the temperature of the coolant follows a differential temperature profile relative to the measured oil temperature in which heat generated due to crystallization is taken into account. The temperature difference between water and oil is different for the different stages of the crystallization process. The stirring settings for the different stages of the crystallization process may vary. This allows to have optimal nucleation, controlled crystal growth and proper annealing / hardening of the crystal aggregates. This results in crystal aggregates with sufficient firmness so that the crystal mass, which normally contains adhering oil, can be separated from the liquid oil using a membrane filter press. Filtration efficiency will partly determine the final melting temperature of the resulting stearin.

The resulting stearin fraction (crystal slurry, [crystals plus adhering oil]) or olein (liquid oil) can be treated multiple times according to the same process described above on different milk fat fractions that vary in chemical composition and subsequently melting temperature. E.g. the olein can be dry fractionated using another temperature profile and stirring settings to yield a lower melting point olein (OO) and a higher melting point stearin (OS).

The skilled person knows how to adjust the cooling profile, stirring rates and filtration conditions to arrive at dry milk fat fractions with desired melting temperatures based on the information disclosed herein, in combination with common general knowledge. In particular in as far as not described in detail in the present disclosure, the melt crystallization conditions can generally be based on known conditions, e.g. on the basis of The Lipid Handbook, G.D.Gunstone, CRC Press, 3rd Edition, Chapters 4.4.2.4 and 4.4.3, Figure 4.20 and Table 4.17 are indicative of common general knowledge; G.A. Van Aken et al, JAOCS, VOL 76, no 11 (1999), p 1323-1331; Physical Properties of Lipids, A.G. Marangoni et al (ed), Chapter 11: Fractionation of Fats, p411-447, see in particular pages 443-445 for milk fat fractionation.

The invention will now be illustrated by the following examples.

EP 3 787 414 B1

### Example 1 preparation of OS fraction

An OS fraction was prepared using a multi-step dry fractionation process according to the Tirtiaux process. In the first step AMF was melted to a temperature of about 20°C above its final melting temperature (i.e. to a temperature of about 55-58 °C). This was done to erase crystal memory. Subsequently the molten AMF was cooled down to a temperature of about 30 °C in a double jacket crystallizer equipped with a stirring device and cooling surfaces. As a result of the cooling down a part of the molten AMF crystallized. The remaining liquid fraction (O) and a crystal slurry (S, to which some olein adhered) where separated by filtration. The recovery of crystal slurry was 30-40 wt.% relative to the weight of the AMF.

Subsequently, the liquid fraction (O) was subjected to a second dry fractionation step. In this step, the liquid fraction was first heated to about 60 °C and then cooled to a temperature of about 22 °C. Part of the oil crystallized. The remaining liquid (OO) and a crystal slurry (OS, to which some olein adhered) were separated by filtration. A crystal slurry was obtained in a yield of 30-40 % relative to the weight of the O-fraction.

The OS had a final melting temperature of about 25 °C.

### Example 2 preparation of whippable or foamable food composition

The following ingredients were used (mentioned concentrations are as in the prepared food composition) to prepare several whippable/foamable compositions according to the invention which in the tables that follow are the compositions "OS25% & AMF75%", "OS50% & AMF50%" and "OS75% & AMF25%", and several reference comparative compositions, namely the compositions "AMF 100%", "S15% & AMF85%" and "S30% & AMF70%":

> 0.01 wt. % carrageenan (Lactarin MV3255, FMC)
> 7.2 wt. % sweet cream butter milk powder, (Nedgold Butter Milk Powder from FrieslandCampina)
> 34.6 wt. % fat.

The fat was either 100 % AMF (commercially available comparative composition), AMF+OS (OS, as obtained by Example 1) or AMF+S (Comparative composition; S as obtained by Example 1), see also Table 1 below.

Fat fractions (AMF, OS, S) and water were separately heated to a temperature of 55-60 °C.

Carrageenan and sweet butter milk powder were solubilized in the heated water (the mixture is hereafter called 'aqueous phase').

The heated fat fraction or fat fractions were mixed with the aqueous phase in a Silverson high shear mixer for 10 min, to form an emulsion.

The emulsion was homogenized (65 °C, pressure 15/5 barg), followed by pasteurization (79 °C, 22 sec) and cooled to 5 °C.

The emulsion was stored at 5 °C, till further processing.

Next, the emulsion was UHT treated by indirect heating (138 °C/4 sec) followed by homogenization (18/10 barg; 30/10 barg or 45/10 barg at 75 °C).

Thereafter, the emulsion was cooled to 4 °C and filled in bottles (1 L or 0.5 L).

Table 1: The calculated CN24-CN40 : CN42-CN56 for the fat in various creams (only AMF, AMF+OS in ratios varying from 25:75 to 75:25 or AMF+S in ratios varying from 15:85 to 50:50) and the ratio SAFA/(PUFA+MUFA)

| FAT PRODUCT | CN24-CN40:CN 42-CN56 | SAFA/(PUF A+MUFA) |
|---|---|---|
| AMF 100% | 1.06 | 2.94 |
| OS 25% & AMF 75 % | 1.14 | 3.20 |
| OS 50% & AMF 50% | 1.22 | 3.46 |
| OS 75% & AMF 25% | 1.30 | 3.72 |
| S 15% & AMF 85 % | 0.98 | |
| S 30% & AMF 70% | 0.90 | |

### Example 3 firmness and firmness variation

The compositions from example 2 (according to the invention and references) were whipped using a Hobart N-50G machine, speed settings nr 2. Whipping temperature was around refrigerator level, approximately 4 - 8 °C (except for Example 7, in which higher whipping temperatures were used). Whipping was continued until maximum overrun was achieved; the skilled person is able to determine the proper whipping time for maximum overrun.

Firmness and firmness variation of whipped creams obtained by whipping various emulsions prepared as described in Example 2 was determined by measuring the highest force (in g) when a cylinder probe of 25mm in diameter and 40mm height is pushed into the product surface by 20mm at the speed of 1 mm/s ( Stable Micro Systems TA-XT Plus apparatus). TA(fresh) = firmness measured directly after whipping TA(24h)= firmness measured 24 hours after whipping (and storing at 4 °C)

$$\%TA\text{difference} = 100\ \%\ *\ [TA(24h) - TA(fresh)]/TA(fresh)$$

%TAdifference is also called 'firmness variation' and a measure for resistance to a detrimental effect of the whippable/foamable composition being exposed to high temperature (heat shock) during storage.

The non-whipped creams had been stored at about 4 °C for 1 week or 12 weeks prior to whipping, either fulltime or interrupted by a heat-shock (1 day at about 25 °C, after 6 days of storage.

Table 2: 1 week storage, homogenization after UHT: 18/10 bar

|  | %TA difference (TA(24h)-TA (fresh))/TA(fresh)* 100 | |
|  | No Heat Shock | With Heat shock |
| --- | --- | --- |
| AMF 100% | 14 | 29 |
| OS 25% & AMF 75 % | 0 | 10 |
| OS 50% & AMF 50% | -4 | 12 |
| OS 75% & AMF 25% | -7 | 10 |
| S 15% & AMF 85 % | 8 | 26 |
| S 30% & AMF 70% | -3 | 23 |

The whipped creams with a higher ratio CN24-CN40 : CN42-CN56 (wherein part of the AMF had been substituted with OS) had less firmness variation than whipped creams made with 100 % AMF. It is further surprising that the whipped creams wherein part of the AMF had been substituted with OS had a similar to better performance than comparable creams made with a combination of AMF and an S-fraction thereof.

Table 3: 1 week storage, homogenization after UHT: 30/10 bar

|  | %TA difference (fresh))/TA(fresh)*100 (TA(24h)-TA | |
|  | No Heat Shock | With Heat shock |
| --- | --- | --- |
| AMF 100% | 20 | 42 |
| OS 25% & AMF 75 % | 8 | 6 |
| OS 50% & AMF 50% | 6 | 23 |
| OS 75% & AMF 25% | 6 | 22 |
| S 15% & AMF 85 % | 13 | 34 |
| S 30% & AMF 70 % | 5 | 33 |

The whipped creams with a higher ratio CN24-CN40 : CN42-CN56 (wherein part of the AMF had been substituted with OS) had less firmness variation than whipped creams made with 100 % AMF. The whipped creams according to the invention further performed surprisingly well compared to creams made with a combination of AMF and an S-fraction thereof.

Table 4: 1 week storage, homogenization after UHT: 45/10 bar

|  | %TA difference (TA(24h)-TA (fresh))/TA(fresh)* 100 | |
|  | No Heat Shock | With Heat shock |
| --- | --- | --- |
| AMF 100% | 10 | 33 |
| OS 25% & AMF 75 % | -7 | 13 |
| OS 50% & AMF 50% | -9 | 4 |
| OS 75% & AMF 25 % | -13 | 36 |

(continued)

|  | %TA difference (TA(24h)-TA (fresh))/TA(fresh)* 100 | |
|---|---|---|
|  | No Heat Shock | With Heat shock |
| S 15% & AMF 85 % | 7 | 39 |
| S 30% & AMF 70% | 3 | 27 |

When homogenization was performed at 45/10 bar overall best results were obtained with a combination of 25 % OS & 75 % AMF or 50 % OS & 50 % AMF.

The firmness variation test was also performed on creams (homogenized after UHT at 18/10 bar) that had been stored for 12 weeks at 4 °C interrupted by a heat shock of 1 day at 25 °C. For each of the creams with a higher ratio CN24-CN40 : CN42-CN56 (wherein part of the AMF had been substituted with OS) the %TAdifference was significantly lower than for 100 % AMF (%TAdifference=35), with best results for the cream with 75 % OS & 25 % AMF ((%TAdifference=10).

For creams homogenized at 30/10 bar after UHT, a further improvement on %TAdifference was shown for the cream with 25 % OS & 75 % AMF (%TAdifference=16) and the cream with 50 % OS & 50 % AMF (%TAdifference=5), versus 100 % AMF ((%TAdifference=31).

**Example 4 overrun and overrun variation**

Overrun (TA) of whipped creams obtained by whipping various emulsions prepared as described in Example 2 was determined directly after whipping by measuring the difference in weight between not-whipped cream and whipped cream divided by the weight of the whipped cream for the same recipient volume multiplied by 100.

The non-whipped creams had been prepared using homogenization after UHT at 18/10 bar, 30/10 bar or 45/10 bar. The non-whipped creams had been stored 1 week or 12 weeks prior to whipping, at about 4 °C , either full-time or interrupted by a heat-shock (1 day at about 25 °C, after 6 days of storage.

Table 5: 1 week storage, homogenization after UHT: 18/10 bar

|  | No Heat Shock | With Heat shock |
|---|---|---|
| AMF 100% | 163 | 160 |
| OS 25% & AMF 75 % | 173 | 172 |
| OS 50% & AMF 50% | 173 | 174 |
| OS 75% & AMF 25% | 176 | 177 |
| S 15% & AMF 85 % | 152 | 163 |
| S 30% & AMF 70% | 155 | 166 |

Table 6: 12 weeks storage, homogenization after UHT: 18/10 bar

|  | No Heat Shock | With Heat shock |
|---|---|---|
| AMF 100% | 150 | 142 |
| OS 25% & AMF 75 % | 166 | 166 |
| OS 50% & AMF 50% | 177 | 172 |
| OS 75% & AMF 25% | 181 | 179 |
| S 15% & AMF 85 % | 160 | 164 |
| S 30% & AMF 70% | 159 | 162 |

Table 7: 1 week storage, homogenization after UHT: 30/10 bar

|  | No Heat Shock | With Heat shock |
|---|---|---|
| AMF 100% | 149 | 156 |

(continued)

|  | No Heat Shock | With Heat shock |
|---|---|---|
| OS 25% & AMF 75 % | 172 | 172 |
| OS 50% & AMF 50% | 185 | 177 |
| OS 75% & AMF 25% | 191 | 179 |
| S 15% & AMF 85 % | 159 | 154 |
| S 30% & AMF 70 % | 135 | 148 |

Table 8: 12 week storage, homogenization after UHT: 30/10 bar

|  | No Heat Shock | With Heat shock |
|---|---|---|
| AMF 100% (ref) | 145 | 150 |
| OS 25% & AMF 75 % | 165 | 160 |
| OS 50% & AMF 50% | 180 | 168 |
| OS 75% & AMF 25% | 190 | 186 |
| S 15% & AMF 85 % | 148 | 173 |
| S 30% & AMF 70% | 135 | 166 |

Table 9: 1 week storage, homogenization after UHT: 45/10 bar

|  | No Heat Shock | With Heat shock |
|---|---|---|
| AMF 100% (ref) | 136 | 130 |
| OS 25% & AMF 75 % | 170 | 165 |
| OS 50% & AMF 50% | 186 | 176 |
| OS 75% & AMF 25% | 195 | 191 |
| S 15% & AMF 85 % (ref) | 142 | 134 |
| S 30% & AMF 70 % (ref) | 140 | 136 |

Table 10: 12 week storage, homogenization after UHT: 45/10 bar

|  | No Heat Shock | With Heat shock |
|---|---|---|
| AMF 100% (ref) | 123 | 123 |
| OS 25% & AMF 75 % | 160 | 149 |
| OS 50% & AMF 50% | 177 | 176 |
| OS 75% & AMF 25% | 201 | 187 |
| S 15% & AMF 85 % (ref) | 124 | 151 |
| S 30% & AMF 70 % (ref) | 102 | 145 |

As illustrated by Tables 5-10, whipped creams with a higher ratio CN24-CN40 : CN42-CN56 (wherein part of the AMF had been substituted with OS) generally had a higher overrun compared to AMF 100% for creams homogenized at 18/10 or 30/10 or 45/10 kept 1 or 12 weeks at 4°C with and without heat shock (1 day at 25 °C). The creams prepared with the OS fraction also generally outperformed the creams prepared with the S fraction.

Further comparisons were made between the overrun of whipped creams that had been made from a whippable cream prepared in accordance with Example 2, after 1 week of storage with whipped creams that had been made in the same way but after 12 weeks of storage. It was found that whipped creams with a higher ratio CN24-CN40 : CN42-CN56 (wherein part of the AMF had been substituted with OS) had a more constant overrun compared to AMF 100%, with and without heat shock (1 day at 25 °C). This is illustrated in the following Table.

Table 11: difference in overrun dependent on storage duration before whipping

|  | No Heat Shock | With Heat Shock |
|---|---|---|
| AMF 100% 18/10 bar Overrun(12-1wk) | -13 | -18 |
| OS 25% & 50% AMF 18/10 bar Overrun(12-1wk) | -8 | -6 |
| OS 50% & AMF 50% 18/10 bar Overrun(12-1wk) | 4 | -2 |
| OS75% & AMF 25% 18/10 bar Overrun(12-1wk) | 5 | 2 |

## Example 5 sensory characteristics.

Various creams made in accordance with Example 2 were evaluated on taste, mouthfeel (initial and 24 hours after whipping), visual texture and colour (whiteness/yellowness).

Whipped creams according to the invention generally shown better mouthfeel properties, a whiter colour and a smoother structure than 100 % AMF for the creams without heat shock and with heat shock after 1 weeks and 12 weeks.

The taste was generally less buttery than 100 % AMF.

Regarding the whipped creams with S fractions, these had a more sticky mouthfeel than both the creams according to the invention and the reference creams with 100 AMF%, for the creams without heat shock and with heat shock after 1 weeks and 12 weeks. Like the whipped creams made with 100 % AMF, they had a sharp visual texture, as opposed to the creams according to the invention, which had a smooth visual texture.

## Example 6 (reference) : creams made with more than 50% OOOO

OO fraction obtained in a method as described in Example 1 was subjected to further dry fractionation according to the Tirtiaux process in an analogous manner as described in Example 1. The fractionation of the OO fraction yielded an OOO fraction and an OOS fraction. OOO fraction was separated from the OOS fraction by filtration and subjected to yet another dryfractionation step, thereby obtaining and OOOO fraction and an OOOS fraction. With the OOOO fraction a cream was formulated in an analogous manner as described in Example 2. However, with this cream no substantial overrun was generated when subjected to whipping.

## Example 7: whipped at elevated temperature

Creams made from a combination of AMF or cream and an OS-fraction and creams made with a fat fraction consisting of OS-fraction (having a relatively high CN24-CN40:CN42-CN56 and SAFA/(PUFA+MUFA)) according to the invention were found to have better whippability, also at a higher product temperature than 4°C, showing a good overrun, good firmness and still good mouthfeel properties compared with AMF 100%. This is illustrated in Tables 12 and 13.

Table 12: 2 weeks storage, homogenization after UHT, No heat shock. Whipped at 12°C

|  | Homog. Press. | Overrun | Firmness |
|---|---|---|---|
| AMF 100% | 18/10 | 88% | 181 |
| AMF 25% & OS 75% | 18/10 | 118 % | 175 |
| AMF 25% & OS 75% | 18/10 | 120 % | 186 |
| AMF 25% & OS 75% | 45/10 | 130 % | 120 |

Table 13: 2 weeks storage, homogenization after UHT, No heat shock. Whipped at 15°C.

|  | Homog. Press. | Overrun | Firmness |
|---|---|---|---|
| AMF 100% | 18/10 | 88 % | 141 |
| AMF 25% & OS 75% | 18/10 | 133 % | 160 |
| AMF 25% & OS 75% | 45/10 | 134 % | 158 |
| OS 100% | 18/10 | 140 % | 168 |
| AMF 50% & OS 50% | 18/10 | 120 % | 150 |
| Cream (42% fat) 50% & OS 50% | 18/10 | 125 % | 120 |

**Claims**

1. Food composition comprising dairy fat - which food composition is whipped or foamed or which food composition is suitable for whipping or foaming, optionally after reconstitution in water - the food composition having a fat content of at least 15 wt.%, preferably of at least 18 wt. %, more preferably of at least 23 wt.%, in particular of at least 30 wt. %, based on total weight of the food composition, the composition comprising acylglycerides having a carbon number in the range of 24-40 ('CN24-CN40') and acylglycerides having a carbon number in the range of 42-56 ('CN42-CN56'), the molar ratio of acylglycerides having a carbon number in the range of 24-40 to acylglycerides having a carbon number in the range of 42-56 ('CN24-CN40 : CN42-CN56') being in the range of 1.1 - 1.4, and wherein, based on the total weight of the fatty acid residues, calculated as fatty acid methyl ester, the food composition has

    a C4:0 fatty acid content of at least 3.5 wt. %, preferably of 4.0-5.0 wt. %;
    a C6:0 fatty acid content of at least 2.0 wt. %, preferably 2.0-3.0 wt. %;
    a C8:0 fatty acid content of at least. 1.0 wt. %, preferably 1.2-1.5 wt. %, and a C12:0 fatty acid content of less than 6.0 wt. %.

2. Food composition according to claim 1 , wherein the food composition is an emulsion of the oil-in-water type, which food composition preferably has a fat content of 45 wt. % or less.

3. Food composition according to claim 1, wherein the food composition is a powder composition which is suitable for whipping or foaming after reconstitution in water.

4. Food composition according to claim 1, wherein the food composition is a whipped or foamed composition.

5. Food composition according to any of the preceding claims, wherein the food composition comprises saturated fatty acids (SAFA), monounsaturated fatty acids (MUFA) and polyunsaturated fatty acids (PUFA), and wherein the weight to weight ratio of SAFA to the sum of PUFA and MUFA calculated on the basis of their fatty acid methyl esters is in the range of 2.4-4.0, preferably in the range of 2.6-3.9, more preferably in the range of 2.95-3.75, in particular in the range of 3.0-3.75, more in particular in the range of 3.0-3.5.

6. Food composition according to any of the preceding claims, wherein, based on the total weight of the fatty acid residues, calculated as fatty acid methyl ester, the food composition has a C12:0 fatty acid content of 1.0-5.0 wt. % and/or wherein the food composition has a content of fatty acid residues with a carbon chain length of 8-12 carbons - based on the total weight of the fatty acid residues of less than 12 wt. %, preferably of 5.0-9.0 wt. %.

7. Food composition according to any of the preceding claims, wherein the total content of acylglycerides having a carbon number of 36 to 38, based on total acylglycerides , is at least 30 mol. %, preferably 32-45 mol. %, in particular 34-42 mol. %.

8. Food composition according to any of the preceding claims, wherein the total content of acylglycerides having a carbon number of 52 to 54, based on total acylglycerides, is 2.0-10 mol. %, preferably 2.5-8 mol. %, in particular 3.0-7.0 mol. %.

9. Method for preparing a whippable food composition, foamable food composition, whipped food composition or foamed food composition comprising dairy fat, in particular a food composition according to any of the preceding claims, comprising mixing acylglycerides having a carbon number in the range of 24-40 ('CN24-CN40') and acylglycerides having a carbon number in the range of 42-56 ('CN42-CN56') in a molar ratio 'CN24-CN40' : 'CN42-CN56' in the range of 1.1 - 1.4, with water, an emulsifier and - if desired - one or more further ingredients, thereby forming the food composition, and wherein

    at least a first dairy fat product is provided, which first dairy fat product is milk fat, e.g. anhydrous milk fat, and at least a second dairy fat product is provided, which second dairy fat product is an OS-fraction of milk fat, obtained in a multiple melt crystallization fractionation process wherein milk fat is fractionated into a first fluid phase ('O') and a first solid phase ('S') and then said first fluid phase is fractionated into a second fluid phase ('OO') and a second solid phase ('OS'), which second solid phase is said second dairy fat product; and mixing the first dairy fat product, the second dairy fat product, water and emulsifier, thereby forming the food composition; or in which method a

**EP 3 787 414 B1**

dairy cream is mixed with said OS-fraction of milk, thereby forming the food composition.

**10.** Method according to claim 9, wherein the first dairy fat product respectively the dairy cream has a fat content 'MF' and the second dairy fat product (OS) has a fat content 'OS' and the first fat product respectively the dairy cream and the second fat product are emulsified with water and emulsifier in a weight to weight ratio MF:OS in the range of 10:90-90:10, preferably 25:75 to 75:25.

**11.** A dairy fat product comprising acylglycerides having a carbon number in the range of 24-40 ('CN24-CN40') and acylglycerides having a carbon number in the range of 42-56 ('CN42-CN56'),

the molar ratio CN24-CN40 : CN42-CN56 being in the range of 1.1 - 1.4, preferably in the range of 1.13 - 1.4, more preferably in the range of 1.2 - 1.4, in particular in the range of 1.3 - 1.4, and the fat product having each of the following characteristics:

- a C4:0 fatty acid content of 4.0-5.0 wt. % based on the total weight of the fatty acid residues, calculated as fatty acid methyl ester;
- a C6:0 fatty acid content of 2.0-3.0 wt. % based on the total weight of the fatty acid residues, calculated as fatty acid methyl ester;
- a C8:0 fatty acid content of 1.2-1.5 wt. % based on the total weight of the fatty acid residues, calculated as fatty acid methyl ester.
- a C12:0 fatty acid content of less than 6.0 wt. %, preferably 1.0-5.0 wt. % based on the total weight of the fatty acid residues, calculated as fatty acid methyl ester
- a total content of fatty acid residues with a carbon chain length of 8-12 carbons - based on the total weight of the fatty acid residues of less than 12 wt. %, preferably of 5.0-9.0 wt. % based on the total weight of the fatty acid residues, calculated as fatty acid methyl ester;
- a total content of acylglycerides having a carbon number of 36 to 38, based on total acylglycerides, of at least 30 mol. %, preferably 32-45 mol. %, in particular 34-42 mol. %,
- a total content of acylglycerides having a carbon number of 52 to 54, based on total acylglycerides, of 2.0-10 mol. %, preferably 2.5-8 mol. %, in particular 3.0-7.0 mol.%
- weight to weight ratio of SAFA to the sum of PUFA and MUFA calculated on the basis of their fatty acid methyl esters in the range of 2.4-4.0, preferably in the range of 2.6-3.9, more preferably in the range of 2.95-3.75, in particular in the range of 3.0-3.75, more in particular in the range of 3.0-3.5.

**12.** A fat product according to claim 11, wherein the fat product is a powder, having an acylglyceride content of at least 90 wt. %, based on total weight, in particular of at least 95 wt. %, based on total weight.

**13.** Method for preparing a powder composition according to claim 3 or any of the claims 5-8, dependent on claim 3, comprising providing a food composition according to claim 2 or any of the claims 5-8, dependent on claim 2, and drying the emulsion of the oil-in-water type.

**Patentansprüche**

**1.** Lebensmittelzusammensetzung, die Milchfett umfasst, wobei die Lebensmittelzusammensetzung aufgeschlagen oder aufgeschäumt wird, oder wobei die Lebensmittelzusammensetzung zum Aufschlagen oder Aufschäumen geeignet ist, gegebenenfalls nach Rekonstitution in Wasser, wobei die Lebensmittelzusammensetzung einen Fettgehalt von mindestens 15 Gew.%, vorzugsweise mindestens 18 Gew.%, bevorzugter mindestens 23 Gew.%, insbesondere von mindestens 30 Gew.% hat, bezogen auf das Gesamtgewicht der Lebensmittelzusammensetzung, wobei die Zusammensetzung Acylglyceride mit einer Kohlenstoffzahl im Bereich von 24 bis 40 ('CN24-CN40') und Acylglyceride mit einer Kohlenstoffzahl im Bereich von 42 bis 56 ('CN42-CN56') umfasst, wobei das molare Verhältnis der Acylglyceride mit einer Kohlenstoffzahl im Bereich von 24 bis 40 zu Acylglyceriden mit einer Kohlenstoffzahl im Bereich von 42 bis 56 ('CN24-CN40:CN42-CN56') im Bereich von 1,1 bis 1,4 liegt, und wobei, bezogen auf das Gesamtgewicht der Fettsäurereste, berechnet als Fettsäuremethylester, die Lebensmittelzusammensetzung einen C4:0-Fettsäuregehalt von mindestens 3,5 Gew.%, vorzugsweise 4,0 bis 5,0 Gew.%; einen C6:0 Fettsäuregehalt von mindestens 2,0 Gew.%, vorzugsweise 2,0 bis 3,0 Gew.%; einen C8:0 Fettsäuregehalt von mindestens 1,0 Gew.%, vorzugsweise 1,2 bis 1,5 Gew.%, und einen C12:0 Fettsäuregehalt von weniger als 6,0 Gew.% hat.

**2.** Lebensmittelzusammensetzung nach Anspruch 1, wobei die Lebensmittelzusammensetzung eine Emulsion vom

16

Öl-in-Wasser-Typ ist, wobei die Lebensmittelzusammensetzung vorzugsweise einen Fettgehalt von 45 Gew.% oder weniger hat.

3. Lebensmittelzusammensetzung nach Anspruch 1, wobei die Lebensmittelzusammensetzung eine Pulverzusammensetzung ist, die nach Rekonstitution in Wasser geeignet zum Aufschlagen oder Aufschäumen ist.

4. Lebensmittelzusammensetzung nach Anspruch 1, wobei die Lebensmittelzusammensetzung eine aufgeschlagene oder aufgeschäumte Zusammensetzung ist.

5. Lebensmittelzusammensetzung nach einem der vorhergehenden Ansprüche, wobei die Lebensmittelzusammensetzung gesättigte Fettsäuren (SAFA), einfach ungesättigte Fettsäuren (MUFA) und mehrfach ungesättigte Fettsäuren (PUFA) umfasst, und wobei das Verhältnis von Gewicht: Gewicht von SAFA zu der Summe aus PUFA und MUFA, berechnet basierend auf ihren Fettsäuremethylestern, im Bereich von 2,4 bis 4,0, vorzugsweise im Bereich von 2,6 bis 3,9, bevorzugter im Bereich von 2,95 bis 3,75, insbesondere im Bereich von 3,0 bis 3,75, bevorzugter im Bereich von 3,0 bis 3,5 liegt.

6. Lebensmittelzusammensetzung nach einem der vorhergehenden Ansprüche, wobei die Lebensmittelzusammensetzung, basierend auf dem Gesamtgewicht der Fettsäurereste, berechnet als Fettsäuremethylester, einen C12:0 Fettsäuregehalt von 1,0 bis 5,0 Gew.% hat, und/oder wobei die Lebensmittelzusammensetzung einen Gehalt an Fettsäureresten mit einer Kohlenstoffkettenlänge von 8 bis 12, basierend auf dem Gesamtgewicht der Fettsäurereste, von weniger als 12 Gew.%, vorzugsweise 5,0 bis 9,0 Gew.% hat.

7. Lebensmittelzusammensetzung nach einem der vorhergehenden Ansprüche, wobei der Gesamtgehalt an Acylglyceriden mit einer Kohlenstoffzahl von 36 bis 38, bezogen auf die gesamten Acylglyceride, mindestens 30 Mol.%. vorzugsweise 32 bis 45 Mol.%, insbesondere 34 bis 42 Mol.% ist.

8. Lebensmittelzusammensetzung nach einem der vorhergehenden Ansprüche, wobei der Gesamtgehalt an Acylglyceriden mit einer Kohlenstoffzahl von 52 bis 54, bezogen auf die gesamten Acylglyceride, 2,0 bis 10 Mol.%, vorzugsweise 2,5 bis 8 Mol.%, insbesondere 3,0 bis 7,0 Mol.% ist.

9. Verfahren zur Herstellung einer aufschlagbaren Lebensmittelzusammensetzung, aufschäumbaren Lebensmittelzusammensetzung, aufgeschlagenen Lebensmittelzusammensetzung oder aufgeschäumten Lebensmittelzusammensetzung, umfassend Milchfett, insbesondere eine Lebensmittelzusammensetzung gemäß einem der vorhergehenden Ansprüche, umfassend Mischen von Acylglyceriden mit einer Kohlenstoffzahl im Bereich von 24 bis 40 ('CN24-CN40') und Acylglyceriden mit einer Kohlenstoffzahl im Bereich von 42 bis 56 ('CN42-CH56') in einem molaren Verhältnis von 'C24-CN40':'CN42-CN56' im Bereich von 1,1 bis 1,4 mit Wasser, einem Emulgator und gewünschtenfalls einem oder mehreren weiteren Bestandteilen, wodurch die Lebensmittelzusammensetzung gebildet wird, und wobei

mindestens ein erstes Milchfettprodukt bereitgestellt wird, wobei das erste Milchfettprodukt Milchfett, z. B. wasserfreies Milchfett, ist, und mindestens ein zweites Milchfettprodukt bereitgestellt wird, wobei das zweite Milchfettprodukt eine OS-Fraktion von Milchfett ist, die in einem Fraktionierprozess mit mehreren Schmelz- und Kristallisationsvorgängen erhalten wird, wobei Milchfett zu einer ersten fließfähigen Phase ('O') und einer ersten festen Phase ('S') fraktioniert wird und dann die erste fließfähige Phase zu einer zweiten fließfähigen Phase ('OO') und einer zweiten festen Phase ('OS') fraktioniert wird, wobei die zweite feste Phase das zweite Milchfettprodukt ist; und
Mischen von dem ersten Milchfettprodukt, dem zweiten Milchfettprodukt, Wasser und Emulgator, wodurch die Lebensmittelzusammensetzung gebildet wird; oder wobei in dem Verfahren eine Milchcreme mit der OS-Fraktion von Milch gemischt wird, wodurch die Lebensmittelzusammensetzung gebildet wird.

10. Verfahren nach Anspruch 9, wobei das erste Milchfettprodukt beziehungsweise die Milchcreme einen Fettgehalt 'MF' hat, und das zweite Milchfettprodukt (OS) einen Fettgehalt 'OS' hat, und das erste Fettprodukt beziehungsweise die Milchcreme und das zweite Fettprodukt mit Wasser und Emulgator in einem Verhältnis von Gewicht:Gewicht MF:OS im Bereich von 10:90 bis 90:10, vorzugsweise 25:75 bis 75:25 emulgiert werden.

11. Milchfettprodukt, umfassend Acylglyceride mit einer Kohlenstoffzahl im Bereich von 24 bis 40 ('CN24-CN40') und Acylglyceride mit einer Kohlenstoffzahl im Bereich von 42 bis 56 ('CN42-CN56'), wobei das molare Verhältnis CN24-CN40:CN42-CN56 im Bereich von 1,1 bis 1,4 liegt, vorzugsweise im Bereich von 1,13 bis 1,4, bevorzugter im Bereich von 1,2 bis 1,4, insbesondere im Bereich von 1,3 bis 1,4, und das Fettprodukt jedes der folgenden Charakteristika hat:

- einen C4:0 Fettsäuregehalt von 4,0 bis 5,0 Gew.%, bezogen auf das Gesamtgewicht der Fettsäurereste, berechnet als Fettsäuremethylester;
- einen C6:0 Fettsäuregehalt von 2,0 bis 3,0 Gew.%, bezogen auf das Gesamtgewicht der Fettsäurereste, berechnet als Fettsäuremethylester;
- einen C8:0 Fettsäuregehalt von 1,2 bis 1,5 Gew.%, bezogen auf das Gesamtgewicht der Fettsäurereste, berechnet als Fettsäuremethylester;
- einen C12:0 Fettsäuregehalt von weniger als 6,0 Gew.%, vorzugsweise 1,0 bis 5,0 Gew.%, bezogen auf das Gesamtgewicht der Fettsäurereste, berechnet als Fettsäuremethylester;
- einen Gesamtgehalt an Fettsäureresten mit einer Kohlenstoffkettenlänge von 8 bis 12, bezogen auf das Gesamtgewicht der Fettsäurereste, von weniger als 12 Gew.%, vorzugsweise 5,0 bis 9,0 Gew.%, bezogen auf das Gesamtgewicht der Fettsäurereste, berechnet als Fettsäuremethylester;
- einen Gesamtgehalt an Acylglyceriden mit einer Kohlenstoffzahl von 36 bis 38, bezogen auf die gesamten Acylglyceride, von mindestens 30 Mol.%, vorzugsweise 32 bis 45 Mol.%, insbesondere 34 bis 42 Mol.%,
- einen Gesamtgehalt an Acylglyceriden mit einer Kohlenstoffzahl von 52 bis 54, bezogen auf die gesamten Acylglyceride, von 2,0 bis 10 Mol.%. vorzugsweise 2,5 bis 8 Mol.%, insbesondere 3,0 bis 7,0 Mol.%,
- ein Verhältnis von Gewicht:Gewicht SAFA zu der Summe aus PUFA und MUFA, berechnet basierend auf ihren Fettsäuremethylestern, im Bereich von 2,4 bis 4,0, vorzugsweise im Bereich von 2,6 bis 3,9, bevorzugter im Bereich von 2,95 bis 3,75, insbesondere im Bereich von 3,0 bis 3,75, spezieller im Bereich von 3,0 bis 3,5.

12. Fettprodukt nach Anspruch 11, wobei das Fettprodukt ein Pulver ist, das einen Acylglyceridgehalt von mindestens 90 Gew.%, bezogen auf das Gesamtgewicht, insbesondere mindestens 95 Gew.% hat, bezogen auf das Gesamtgewicht.

13. Verfahren zur Herstellung einer Pulverzusammensetzung nach Anspruch 3 oder einem der Ansprüche 5 bis 8 in Abhängigkeit von Anspruch 3, umfassend Bereitstellen einer Lebensmittelzusammensetzung nach Anspruch 2 oder einem der Ansprüche 5 bis 8 in Abhängigkeit von Anspruch 2, und Trocknen der Emulsion vom Öl-in-Wasser-Typ.

## Revendications

1. Composition alimentaire comprenant des matières grasses laitières - composition alimentaire qui est fouettée ou en mousse ou bien composition alimentaire qui est appropriée pour un fouettage ou un moussage, en option après reconstitution dans de l'eau - la composition alimentaire ayant une teneur en matières grasses d'au moins 15% en poids, de préférence d'au moins 18% en poids, mieux préféré d'au moins 23% en poids, en particulier d'au moins 30% en poids, sur la base du poids total de la composition alimentaire, la composition comprenant des acylglycérides ayant un nombre de carbones compris dans la plage des 24-40 ('CN24-CN40') et des acylglycérides ayant un nombre de carbones compris dans la plage des 42-56 ('CN42-CN56'), le ratio molaire des acylglycérides ayant un nombre de carbones compris dans la plage des 24-40 aux acylglycérides ayant un nombre de carbones compris dans la plage des 42-56 ('CN24-CN40:CN42-CN56') étant compris dans la plage des 1,1-1,4, et la composition alimentaire ayant, sur la base du poids total des résidus d'acides gras,

une teneur en acides gras C4:0 d'au moins 3,5% en poids, de préférence de 4,0-5,0% en poids ;
une teneur en acides gras C6:0 d'au moins 2,0% en poids, de préférence 2,0-3,0% en poids ;
une teneur en acides gras C8:0 d'au moins 1,0% en poids, de préférence de 1,2-1,5% en poids, et
une teneur en acides gras C12:0 inférieure à 6,0% en poids.

2. Composition alimentaire selon la revendication 1, la composition alimentaire étant une émulsion du type huile-dans-l'eau, laquelle composition alimentaire a, de préférence, une teneur en matières grasses de 45% en poids ou moins.

3. Composition alimentaire selon la revendication 1, la composition alimentaire étant une composition en poudre qui est appropriée pour un fouettage ou un moussage après reconstitution dans de l'eau.

4. Composition alimentaire selon la revendication 1, la composition alimentaire étant une composition fouettée ou en mousse.

**5.** Composition alimentaire selon l'une quelconque des revendications précédentes, la composition alimentaire comprenant des acides gras saturés (SAFA), des acides gras mono-insaturés (MUFA) et des acides gras polyinsaturés (PUFA), et dans laquelle le ratio, du poids au poids, des SAFA à la somme des PUFA et MUFA, calculé sur la base de leurs esters méthyliques d'acides gras, est compris dans la plage des 2,4-4,0, de préférence dans la plage des 2,6-3,9, mieux préféré dans la plage des 2,95-3,75, en particulier dans la plage des 3,0-3,75, plus en particulier dans la plage des 3,0-3,5.

**6.** Composition alimentaire selon l'une quelconque des revendications précédentes, dans laquelle, sur la base du poids total des résidus d'acides gras, calculé en tant qu'ester méthylique d'acide gras, la composition alimentaire a une teneur en acides gras C12:0 de 1,0-5,0% en poids et/ou la composition alimentaire ayant une teneur en résidus d'acides gras avec une longueur de chaîne carbonée de 8-12 carbones - sur la base du poids total des résidus d'acides gras - inférieure à 12% en poids, de préférence de 5,0-9,0% en poids.

**7.** Composition alimentaire selon l'une quelconque des revendications précédentes, dans laquelle la teneur totale en acylglycérides ayant un nombre de carbones de 36 à 38, sur la base des acylglycérides totaux, est d'au moins 30 mol.%, de préférence 32-45 mol.%, en particulier 34-42 mol.%.

**8.** Composition alimentaire selon l'une quelconque des revendications précédentes, dans laquelle la teneur totale en acylglycérides ayant un nombre de carbones de 52 à 54, sur la base des acylglycérides totaux, est de 2,0-10 mol.%, de préférence 2,5-8 mol.%, en particulier 3,0-7,0 mol.%.

**9.** Procédé destiné à préparer une composition alimentaire à fouetter, une composition alimentaire à mousser, une composition alimentaire fouettée ou une composition alimentaire en mousse comprenant des matières grasses laitières, en particulier une composition alimentaire selon l'une quelconque des revendications précédentes, comprenant le mélange d'acylglycérides ayant un nombre de carbones dans la plage des 24-40 ('CN24-CN40') et d'acylglycérides ayant un nombre de carbones compris dans la plage des 42-56 ('CN42-CN56') avec un ratio molaire 'CN24-CN40':'CN42-CN56' compris dans la plage des 1,1-1,4, avec de l'eau, un émulsifiant et - si cela est souhaité - un ou plusieurs ingrédient(s) supplémentaire(s), en formant de ce fait la composition alimentaire, et dans laquelle au moins un premier produit à base de matières grasses laitières est fourni, lequel premier produit à base de matières grasses laitières est de la matière grasse du lait, à titre d'exemple de la matière grasse du lait anhydre, et au moins un deuxième produit à base de matières grasses laitières est fourni, lequel deuxième produit à base de matières grasses laitières est une fraction OS de la matière grasse du lait, obtenue dans un processus de fractionnement par cristallisation avec plusieurs fusions dans lequel de la matière grasse du lait est fractionnée en une première phase liquide ('O') et une première phase solide ('S'), puis ladite première phase liquide est fractionnée en une deuxième phase liquide ('OO') et une deuxième phase solide ('OS'), deuxième phase solide qui est nommée deuxième produit à base de matières grasses laitières ; et
le mélange du premier produit à base de matières grasses laitières, du deuxième produit à base de matières grasses laitières, d'eau et d'un émulsifiant, en formant de ce fait la composition alimentaire ; ou procédé dans lequel une crème laitière est mélangée avec ladite fraction OS du lait, en formant de ce fait la composition alimentaire.

**10.** Procédé selon la revendication 9, dans lequel le premier produit à base de matières grasses laitières, respectivement la crème laitière, a une teneur en matières grasses 'MF' et le deuxième produit à base de matières grasses laitières ('OS') a une teneur en matières grasses 'OS' et le premier produit à base de matières grasses, respectivement la crème laitière, et le deuxième produit à base de matières grasses sont émulsifiés avec de l'eau et un émulsifiant avec un ratio MF:OS, du poids au poids, compris dans la plage des 10:90-90:10, de préférence de 25:75 à 75:25.

**11.** Produit à base de matières grasses laitières comprenant des acylglycérides ayant un nombre de carbones dans la plage des 24-40 ('CN24-CN40') et des acylglycérides ayant un nombre de carbones compris dans la plage des 42-56 ('CN42-CN56'),

le ratio molaire CN24-CN40:CN42-CN56 étant compris dans la plage des 1,1-1,4, de préférence dans la plage des 1,13-1,4, mieux préféré dans la plage des 1,2-1,4, en particulier dans la plage des 1,3-1,4,
et le produit à base de matières grasses ayant chacune des caractéristiques suivantes :

- une teneur en acides gras C4:0 de 4, 0-5, 0% en poids, sur la base du poids total des résidus d'acides gras, calculée en tant qu'ester méthylique d'acide gras ;
- une teneur en acides gras C6:0 de 2,0-3,0% en poids, sur la base du poids total des résidus d'acides gras, calculée en tant qu'ester méthylique d'acide gras ;

- une teneur en acides gras C8:0 de 1,2-1,5% en poids, sur la base du poids total des résidus d'acides gras, calculée en tant qu'ester méthylique d'acide gras.

- une teneur en acides gras C12:0 inférieure à 6,0% en poids, de préférence 1,0-5,0% en poids, sur la base du poids total des résidus d'acides gras, calculée en tant qu'ester méthylique d'acide gras

- une teneur totale de résidus d'acides gras avec une longueur de chaîne carbonée de 8-12 carbones - sur la base du poids total des résidus d'acides gras inférieure à 12% en poids, de préférence de 5,0-9,0% en poids sur la base du poids total des résidus d'acides gras, calculée en tant qu'ester méthylique d'acide gras ;

- une teneur totale en acylglycérides ayant un nombre de carbones de 36 à 38, sur la base des acylglycérides totaux, d'au moins 30 mol.%, de préférence 32-45 mol.%, en particulier 34-42 mol.%,

- une teneur totale en acylglycérides ayant un nombre de carbones de 52 à 54, sur la base des acylglycérides totaux, de 2,0-10 mol.%, de préférence 2,5-8 mol.%, en particulier 3,0-7,0 mol.%

- un ratio, du poids au poids, des SAFA à la somme des PUFA et MUFA, calculé sur la base de leurs esters méthyliques d'acides gras, compris dans la plage des 2,4-4,0, de préférence dans la plage des 2,6-3,9, mieux préféré dans la plage des 2,95-3,75, en particulier dans la plage des 3,0-3,75, plus en particulier dans la gamme des 3,0-3,5.

12. Produit à base de matières grasses selon la revendication 11, le produit à base de matières grasses étant une poudre, ayant une teneur en acylglycérides d'au moins 90% en poids, sur la base du poids total, en particulier d'au moins 95 % en poids sur la base du poids total.

13. Procédé destiné à préparer une composition en poudre selon la revendication 3 ou l'une quelconque des revendications 5-8, dépendant de la revendication 3, comprenant la fourniture d'une composition alimentaire selon la revendication 2 ou l'une quelconque des revendications 5-8, dépendant de la revendication 2, et un séchage de l'émulsion du type huile-dans-l'eau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 635216 A1
- JP 2007282535 A
- US 9648895 B2
- EP 3289884 A1
- US 4375485 A
- WO 2013151423 A1

### Non-patent literature cited in the description

- **BAZMI et al.** Aeration of low fat dairy emulsions: Effects of saturatedunsaturated triglycerides. *INTERNATIONAL DAIRY JOURNAL,* 11 June 2007, vol. 17 (9), 1021-1027
- **BAZMI et al.** Effects of processing conditions on structural and functional parameters of whipped dairy emulsions containing various fatty acid compositions. *JOURNAL OF DAIRY SCIENCE,* August 2009, vol. 92 (8), 3566-3574
- **DEFFENSE, E.M.J.** *Fat Sci. Technol.,* 1987, vol. 89, 502-507
- **G.D.GUNSTONE.** The Lipid Handbook. CRC Press
- **G.A. VAN AKEN et al.** *JAOCS,* 1999, vol. 76 (11), 1323-1331
- Fractionation of Fats. Physical Properties of Lipids. 411-447